# EUROPÄISCHE PATENTSCHRIFT

(11) **EP 3 445 527 B1**
(45) Veröffentlichungstag und Bekanntmachung des Hinweises auf die Patenterteilung: **12.06.2024**
(21) Anmeldenummer: 17716461.3
(22) Anmeldetag: 28.03.2017
(51) Int. Cl.: B23Q 7/14, B66F 9/06, B65G 65/00

(54) **FERTIGUNGSANLAGE MIT EINEM TRANSPORTSYSTEM ZUM TRANSPORTIEREN EINES BEHÄLTNISSES UND VERFAHREN ZUM BETREIBEN EINER FERTIGUNGSANLAGE MIT EINEM TRANSPORTSYSTEM**
PRODUCTION INSTALLATION HAVING A TRANSPORTING SYSTEM FOR TRANSPORTING A RECEPTACLE AND METHOD FOR OPERATING A PRODUCTION INSTALLATION HAVING A TRANSPORTING SYSTEM
INSTALLATION DE PRODUCTION COMPRENANT UN SYSTÈME DE TRANSPORT POUR TRANSPORTER UN CONTENANT ET PROCÉDÉ PERMETTANT DE FAIRE FONCTIONNER UNE INSTALLATION DE PRODUCTION COMPRENANT UN SYSTÈME DE TRANSPORT

(30) Priorität: 22.04.2016 DE 102016004883
(43) Veröffentlichungstag der Anmeldung: 27.02.2019
(73) Patentinhaber: SEW-EURODRIVE GmbH & Co. KG, 76646 Bruchsal (DE)
(72) Erfinder: SODER, Johann, 76707 Hambrücken (DE)
(86) Internationale Anmeldenummer: PCT/EP2017/025067
(87) Internationale Veröffentlichungsnummer: WO 2017/182135

(56) Entgegenhaltungen:
- WO-A1-2013/135227
- WO-A1-2016/026910
- DE-A1- 3 413 255
- DE-A1- 19 626 966
- FR-A1- 2 996 788
- JP-U- S6 413 514

## Beschreibung

**Die** Erfindung betrifft ein Verfahren zum Betreiben einer Fertigungsanlage mit einem Transportsystem zum Transportieren eines Behältnisses und eine Fertigungsanlage mit einem Transportsystem zum Transportieren eines Behältnisses.

Es ist allgemein bekannt, dass ein Transportsystem zum Transportieren eines Behälters vorsehbar ist. Beispielsweise sind hierzu Fließbänder, also Förderbänder, allgemein bekannt.

### Aus der WO 20161026910 A1 ist als nächstliegender Stand der Technik ein

**Lagersystem bekannt.** Das genannte Dokument offenbart ein Verfahren zum Betreiben einer Anlage mit einem Transportsystem zum Transportieren eines Behältnisses, wobei das Transportsystem ein Fahrzeug und ein autonomes Transportfahrzeug, aufweist an dessen Gestell zwei voneinander beabstandete Radantriebe, jeweils aufweisend ein Rad, angeordnet sind, wobei die beiden Räder zum Erzeugen von Traktionskraft für das Transportfahrzeug einen Boden berührend angeordnet sind, wobei die Radachsen der beiden Räder zueinander parallel ausgerichtet sind, wobei am Gestell ein erstes und ein zweites Absatzteil angeordnet ist, wobei das erste Absatzteil vom zweiten Absatzteil beabstandet ist, wobei zwischen den Radantrieben und zwischen den Absatzteilen ein Raumbereich angeordnet ist, in welchen das Fahrzeug mit dem von ihm aufgenommenen Behältnis einfahrbar ist und aus welchem das Fahrzeug mit dem Behältnis herausfahrbar ist, wobei das Behältnis eine Breite aufweist, welche größer ist als der Abstand zwischen den Absatzteilen, wobei das Fahrzeug eine Hubvorrichtung aufweist und das Fahrzeug bei eingefahrener und auch bei ausgefahrener Hubvorrichtung in den Raumbereich einfahrbar ist, wobei das Behältnis bei ausgefahrener Hubvorrichtung oberhalb der Absatzteile am Fahrzeug anordenbar ist, wobei das Behältnis bei eingefahrener Hubvorrichtung auf den Absatzteilen aufgesetzt anordenbar ist, wobei die Berührflächen des Behältnisses mit den Absatzteilen, jeweils den gleichen Abstand zum Boden aufweisen und wobei die Absatzteile vom Fahrzeug unterfahrbar sind.

**Aus der** DE 196 26 966 A1 **ist ein spurgeführtes Transportsystem mit Transportfahrzeugen bekannt.**

**Aus der** JP S64 13514 U **ist ein autonomes intralogistisches Fahrzeug bekannt.**

**Aus der** DE 34 13 255 A1 **ist ein Verfahren zum Betreiben eines modularen flexiblen Montagesystems bekannt.**

**Aus der** WO 2013/135227 A1 **ist ein Verfahren zum effektiven Zusammenstellen von Kommissionierpaletten bekannt.**

**Aus der** FR 2 996 788 A1 **ist ein Verfahren zum Betreiben eines intralogistischen Warenhauses mit Lager bekannt.**

Der Erfindung liegt daher die Aufgabe zugrunde, ein Transportsystem für den logistischen Transport weiterzubilden.

**Erfindungsgemäß wird die Aufgabe** durch ein Verfahren nach Anspruch 1 zum Betreiben einer Fertigungsanlage mit einem Transportsystem zum Transportieren eines Behältnisses und einer Fertigungsanlage nach Anspruch 3 mit einem Transportsystem zum Transportieren eines Behältnisses zur Durchführung des Verfahrens nach Anspruch 1 **gelöst.**

Wichtige Merkmale bei dem erfindungsgemäßen Verfahren zum Betreiben einer Fertigungsanlage mit einem Transportsystem sind, dass in einem ersten Verfahrensschritt das insbesondere von einem Infrastrukturfahrzeug herantransportierte Transportfahrzeug autonom an einem Sensor der Fertigungsanlage vorbei, insbesondere durch ein Eingangstor der Fertigungsanlage, in eine Transferzone fährt, insbesondere wobei der Sensor ein RFID-Lesegerät aufweist,
wobei mittels des Sensors eine Information über die in einem Behältnis enthaltenen Waren, insbesondere Transportgut, einem zentralen Rechner der Fertigungsanlage übermittelt wird,
insbesondere wobei dem Transportfahrzeug in der Transferzone Energie zugeführt wird, insbesondere induktiv zugeführt wird zur Aufladung seines Energiespeichers, wobei in einem nachfolgenden Verfahrensschritt das transportfahrzeug zu einer Montagezelle autonom fährt,
wobei das Fahrzeug zumindest ein Behältnis aus dem Transportfahrzeug entnimmt und zu einer der Arbeitsstationen der Montagezelle transportiert und dort das Behältnis absetzt, insbesondere auf einem Lagerbock der jeweiligen Arbeitsstation,
wobei zur Herstellung eines Produktes an der jeweiligen Arbeitsstation eine jeweilige Ware, insbesondere Transportgut, dem Behältnis entnommen wird.

Von Vorteil ist dabei, dass kein Lager für die mit dem Transportfahrzeug transportierten Behältnisse notwendig ist sondern eine als Lagerplatz das Transportfahrzeug selbst, insbesondere in der Transferzone, verwendbar ist. Somit ist ein Hochregallager erfindungsgemäß einsparbar oder zumindest kleiner ausführbar, falls parallel zum erfindungsgemäßen beschriebenen Transportfahrzeug und dessen Nutzung auch noch klassische logistische Verfahrensschritte angewendet werden. Bei einer vorteilhaften Ausgestaltung wird nach der Entleerung des Behältnisses dieses von dem Fahrzeug abgeholt und in ein oder das Transportfahrzeug eingelagert, welches insbesondere über die Transferzone am Sensor vorbei aus der Fertigungsanlage autonom herausfährt, insbesondere zu einem weiteren Infrastrukturfahrzeug. Von Vorteil ist dabei, dass einen Leergutkreislauf in einfacher Weise einrichtbar ist und die Transportfahrzeuge somit nicht nur zum Herantransportieren von Waren, sondern auch zum Abtransportieren leerer Behältnisse verwendbar sind.

Erfindungsgemäß weist das Transportsystem ein Fahrzeug und ein Transportfahrzeug auf, an dessen Gestell zwei voneinander beabstandete Radantriebe, jeweils aufweisend ein Rad, angeordnet sind, wobei die beiden Räder zum Erzeugen von Traktionskraft für das Transportfahrzeug einen Boden berührend angeordnet sind,

insbesondere wobei die Radachsen der beiden Räder zueinander parallel ausgerichtet sind, wobei am Gestell ein erstes und ein zweites Absatzteil angeordnet und/oder ausgebildet ist, wobei das erste Absatzteil vom zweiten Absatzteil beabstandet ist,
wobei zwischen den Radantrieben und zwischen den Absatzteilen ein Raumbereich angeordnet ist, in welchen das Fahrzeug mit dem von ihm aufgenommenen Behältnis einfahrbar ist und aus welchem das Fahrzeug mit dem Behältnis herausfahrbar ist,
wobei das Behältnis eine Breite aufweist, welche größer ist als der Abstand, insbesondere kleinste Abstand, zwischen den Absatzteilen,
wobei das Fahrzeug eine Hubvorrichtung aufweist und das Fahrzeug bei eingefahrener und auch bei ausgefahrener Hubvorrichtung in den Raumbereich einfahrbar ist,
wobei das Behältnis bei ausgefahrener Hubvorrichtung oberhalb der Absatzteile am Fahrzeug anordenbar ist,
wobei das Behältnis bei eingefahrener Hubvorrichtung auf den Absatzteilen aufgesetzt anordenbar ist.

Von Vorteil ist dabei, dass das Fahrzeug bei ausgefahrener Hubvorrichtung in den Raumbereich im Transportfahrzeug einfahrbar ist, wobei das Behältnis oberhalb der Absatzteile, also mit größerem Abstand zum Boden als die Absatzteile, angeordnet ist. Durch das einfahren der Hubvorrichtung und somit Herunterfahren des Behältnisses wird dieses wegen seiner genügend großen Breite auf die Absatzteile aufgesetzt. Dabei bezieht sich die Breite des Behältnisses auf die Ausdehnung des Behältnisses in Richtung der kürzesten Verbindungslinie zwischen den beiden Absatzteilen. Das Fahrzeug mit seiner Hubvorrichtung weist eine genügend kleine Breite auf, um im Beabstandungsbereich zwischen den Absatzteilen die Hubvorrichtung ausfahren oder einfahren zu können. Auf diese Weise ist also ein Behältnis, welches auf einer Hubvorrichtung des Fahrzeugs aufgenommen ist, übergebbar an das Transportfahrzeug, welches ein schützendes Gestell mit Gehäuse aufweist. Das Gehäuse des Transportfahrzeugs umgibt das Behältnis zumindest nicht nur seitlich, sondern auch von oben, also auch dachartig. Somit ist das Behältnis vor Niederschlag schützbar. Nach dem Herausfahren des Fahrzeugs aus dem Raumbereich ist das Transportfahrzeug frei am Boden verfahrbar. Es ist also auch beispielsweise in einen Lastkraftwagen oder in einen Güterzugwagon fahrbar.

Somit ist mit dem Fahrzeug ein Transport innerhalb eines Gebäudes ausführbar und mit dem Transportfahrzeug ein Transport außerhalb des Gebäudes.

Im Behältnis ist Transportgut aufnehmbar.

Erfindungsgemäß ist also ein logistischer Transport in einen intralogistischen Transport, also einen innerhalb eines Gebäudes ausgeführten Transport, und einen Außentransport in der Umgebung ausführbar.

Der intralogistische Transport ist mit einem kostengünstigen einfachen, eine Hubvorrichtung aufweisenden Fahrzeug ausführbar. Der Außentransport ist mit einem Transportfahrzeug ausführbar, das Schutz gegen Umwelteinflüsse bietet. Hierzu weist das Transportfahrzeug ein schützendes Gehäuse auf, insbesondere mit einer aktivierbaren Abdeckung, also Rollentür oder Tür oder dergleichen.

Bei einer vorteilhaften Ausgestaltung sind das erste und zweite Absatzteil als zwei parallel verlaufende Schienen ausgeformt,

insbesondere wobei die Schienenrichtung parallel zur auf das Transportfahrzeug bezogene Fahrtrichtung des Fahrzeugs beim Einfahren oder Herausfahren des Fahrzeugs ist. Von Vorteil ist dabei, dass eine stabile Lagerung des Behältnisses ausführbar ist.

Bei einer vorteilhaften Ausgestaltung ist der Raumbereich mit einer Abdeckung verschließbar,

insbesondere so, dass die eingelagerten Behältnisse vor Niederschlag aus der Umgebung geschützt angeordnet sind. Von Vorteil ist dabei, dass ein Außentransport des Behältnisses ausführbar ist. die Abdeckung ist als Rollentür, Tür oder dergleichen ausführbar. Dabei muss die Abdeckung deaktivierbar sein, so dass der Raumbereich für das Fahrzeug frei zugänglich ist. Erst durch Aktivieren der Abdeckung ist ein schützendes Verschließen des Raumbereichs ermöglicht.

Erfindungsgemäß weisen die Berührflächen des Behältnisses mit den Absatzteilen, jeweils den gleichen Abstand zum Boden auf. Von Vorteil ist dabei, dass das Behältnis ohne Neigung auf den absatzteilen absetzbar ist, wenn das Behältnis eine ebene Auflagefläche an seiner Unterseite aufweist, wobei es mit der Auflagefläche auf die Absatzteile aufsetzbar ist.

Die Absatzteile sind vom Fahrzeug unterfahrbar, insbesondere bei eingefahrener Hubvorrichtung. Von Vorteil ist dabei, dass ein unterfahren ohne Berührung ausführbar ist. Somit ist nach dem Einfahren ein Ausfahren der Hubvorrichtung ausführbar und dann das Behältnis anhebbar.

Bei einer vorteilhaften Ausgestaltung sind die Radantriebe linear beweglich am Gestell des Transportfahrzeugs angeordnet, insbesondere gleitend oder federnd gelagert sind. Von Vorteil ist dabei, dass nicht das gesamte Gewicht des Transportfahrzeugs über die Räder geleitet wird, sondern nur das Gewicht der Radantriebe.

Bei einer vorteilhaften Ausgestaltung weist das Transportfahrzeug Lenkrollen zur Ableitung der um die Gewichtskraft der Radantriebe reduzierten Gewichtskraft des Transportfahrzeugs auf, insbesondere wobei zwischen den Lenkrollen der Raumbereich angeordnet ist. Von Vorteil ist dabei, dass die Lenkrollen entsprechend kostengünstig und stabil auslegbar sind, so dass der wesentliche Teil der Gewichtskraft über die Lenkrollen an den Boden leitbar ist.

Bei einer vorteilhaften Ausgestaltung weisen die Radantriebe jeweils einen Elektromotor auf, wobei die Elektromotoren aus einem Energiespeicher versorgbar sind, der aus einer Sekundärwicklung speisbar ist. Von Vorteil ist dabei, dass eine induktive Übertragung elektrischer Energie vom Boden her ans Transportfahrzeug ausführbar ist.

Bei einer vorteilhaften Ausgestaltung ist die Sekundärwicklung induktiv an einen am Boden angeordneten Primärleiter koppelbar. Von Vorteil ist dabei, dass eine berührungslose induktive Energieversorgung ausführbar ist.

Bei einer vorteilhaften Ausgestaltung ist der Sekundärwicklung eine Kapazität in Reihe oder parallel zugeschaltet,
wobei die Resonanzfrequenz des so gebildeten Schwingkreises der Frequenz des in den Primärleiter eingeprägten Wechselstroms entspricht. Von Vorteil ist dabei, dass ein hoher Wirkungsgrad bei der induktiven Übertragung elektrischer Energie erreichbar ist.

Das Transportfahrzeug weist eine Steuerung auf, die mit einem Positionserfassungssystem des Transportfahrzeugs und/oder Abstandssensoren des Transportfahrzeugs verbunden ist. Von Vorteil ist dabei, dass ein Navigieren in einfacher Weise ermöglicht ist.

Die Erfindung wird durch die unabhängigen Ansprüche definiert. Weitere Vorteile ergeben sich aus den Unteransprüchen.

Die Erfindung wird nun anhand von Abbildungen näher erläutert:
In der Figur 1 ist ein erster Zustand eines intralogistischen Systems gezeigt, welches ein Transportfahrzeug 4 aufweist und ein Behältnisse 2 transportierendes Fahrzeug 3.
In der Figur 2 ist ein zweiter Zustand des Systems dargestellt, wobei die Behältnisse 2 auf einem Absatz 8 des Transportfahrzeuges 4 abgesetzt sind und das Fahrzeug 3 aus dem Transportfahrzeug 4 herausfährt.
In der Figur 3 ist das Transportfahrzeug 4 mit den in ihm auf dem Absatz 8 gelagerten Behältnissen in Schrägansicht dargestellt.
In der Figur 4 ist ein Lastkraftwagen 41, also LKW, gezeigt, in welchen Transportfahrzeuge eingefahren und somit aufgenommen sind.
In der Figur 5 ist die Verwendung des intralogistischen Systems für eine Fertigungsanlage dargestellt.

Wie in den Figuren gezeigt weist das intralogistische System ein Fahrzeug 3 auf, welches auf dem Boden verfahrbar ist und eine heb- oder senkbare Aufnahme, insbesondere Platte, aufweist.

Somit ist ein auf Lagerböcken 1 gelagertes Behältnis 2, also Behälter, unterfahrbar und durch Ausfahren der hebbaren Aufnahme aufnehmbar. Denn das Behältnis 2 ist nur von oben aufgesetzt auf die Lagerböcke 1 und ist somit durch Anheben mittels der Aufnahme des Fahrzeugs 3 entfernbar von den Lagerböcken.

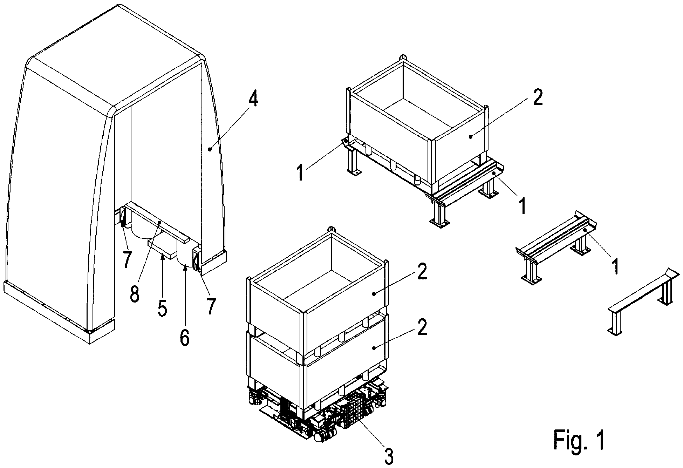

Wie in Figur 1 gezeigt, fährt dann das Fahrzeug 3 mit den so aufgenommenen Behältnissen 2 in ein Transportfahrzeug 4 ein, welches kapselartig ausgeführt ist. Dabei weist das Transportfahrzeug 4 selbst Lenkrollen 7 auf, so dass das Gewicht des Transportfahrzeugs im Wesentlichen über die Lenkrollen 7 aufgenommen ist. die Lenkrollen sind drehbar gelagert, so dass ein Bewegen des Transportfahrzeugs 4 auf dem Boden ermöglicht ist. Die Lenkrollen 7 sind über eine Achse mit dem Gestell des Transportfahrzeugs 4 verbunden und drehen sich somit stets entsprechend der Fahrtrichtung.

Das Transportfahrzeug 4 weist auch eine Steuerung auf, welche die Antriebe 5 ansteuert, welche Räder antreiben. Diese Räder bewirken die Traktion. Durch Drehzahlunterschiede gegenüber angeordneter Räder ist eine Lenkung, also Änderung der Traktionsrichtung ausführbar.

Die Räder sind nur so stark gegen den Boden gedrückt, dass genügend Haftreibung vorhanden ist, um den Vortrieb zu bewirken. Beispielsweise wird der Antrieb gleitend oder federnd am Gestell des Transportfahrzeugs angeordnet, so dass nur die Gewichtskraft des Antriebs über die Räder an den Boden geleitet wird.

Beidseitig von demjenigen Raumbereich, in welchen das Fahrzeug 3 einfährt, um die Behältnisse 2 in den Transportbehälter 4 einzulagern oder auszulagern, ist jeweils zumindest ein Antrieb mit zumindest einem Rad angeordnet. Solange das Fahrzeug 3 im Transportfahrzeug 4 sich aufhält, bewegt sich das Transportfahrzeug 4 nicht oder nur parallel zum Fahrzeug 3.

Das Transportfahrzeug 4 weist ein mit dem Gestell des Transportfahrzeugs 4 verbundenes Gehäuseteil auf, welches die eingelagerten Behältnisse 2 zumindest teilweise gehäusebildend umgibt.

An der Innenseite des Gehäuseteils oder Gestells des Transportfahrzeugs 4 ist ein beidseitig angeordneter Absatz 8 ausgebildet, insbesondere ein auskragender Abschnitt ausgeformt. Somit werden die am Fahrzeug 3 beidseitig überstehenden Behältnisse beim Absenken der hebbaren Aufnahme auf dem beidseitig angeordneten Absatz 8, der vorzugsweise zweiteilig ausgeführt ist, abgesetzt. Somit transportiert das Transportfahrzeug 4 die Behältnisse 2 nach dem Herausfahren des Fahrzeugs 3 aus dem Transportfahrzeug 4.

Der Absatz 8 ist derart vom Boden beabstandet, dass ein Unterfahren der Behältnisse 2 mittels des Fahrzeugs 3 ermöglicht ist. Das Fahrzeug 3 kann also bei eingefahrener Hubachse unter die im Transportfahrzeug 4 eingelagerten Behältnisse 2 fahren und durch Ausfahren der Hubachse diese aufnehmen.

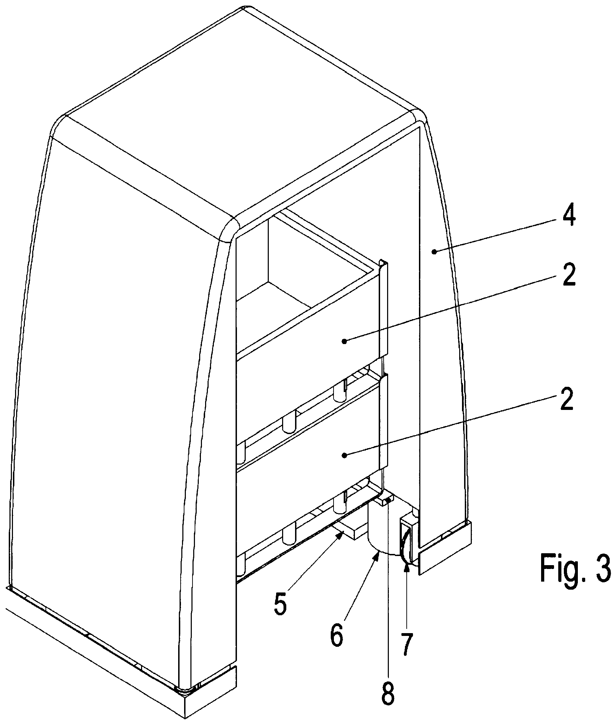

Das Gehäuseteil des Transportfahrzeugs 4 überdacht die in ihm eingelagerten Behältnisse 2, wie in Figur 3 ersichtlich ist.

Der für das Fahrzeug 3 vorgesehene Einfahrbereich ist mittels einer Abdeckung 40, insbesondere Rolltür, also Rolltor, verschließbar, so dass die Behältnisse 2 im Transportfahrzeug 4 vor Niederschlag oder Schmutz der Umgebung geschützt sind, wenn die Abdeckung 40 aktiviert ist. Zum Ermöglichen des Einfahrens der Fahrzeuge 3 in das Transportfahrzeug 4 wird die Abdeckung 40 deaktiviert und somit der Einfahrbereich für das Fahrzeug 3 zugänglich gemacht.

Wesentlich ist bei dem Transportfahrzeug 4, dass zwei angetriebene Räder samt ihrer Antriebe 6 derart am Gestell des Transportfahrzeuges angeordnet sind, dass ein Fahrzeug 3 samt Behältnissen 2 in das Transportfahrzeug 4 einfahrbar ist, wobei die Hubachse dabei ausgefahren sein muss und somit die Behältnisse 2 oberhalb des Absatzes 8 angeordnet sind. Außerdem ist dabei das Fahrzeug 3 zwischen den beiden Rädern angeordnet, also schneidet die, insbesondere jede, Verbindungslinie der beiden Räder das Fahrzeug 3.

Der minimale Abstand der beiden Absatzteile 8 zueinander ist kleiner als die Breite der Behältnisse 2.

Der Boden ist vorzugsweise eben ausgeführt. Somit stellt er eine Verfahrebene für das Transportfahrzeug 4 und das Fahrzeug 3 dar.

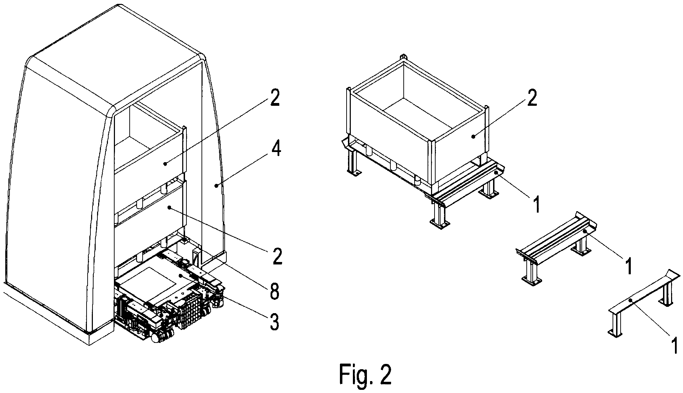

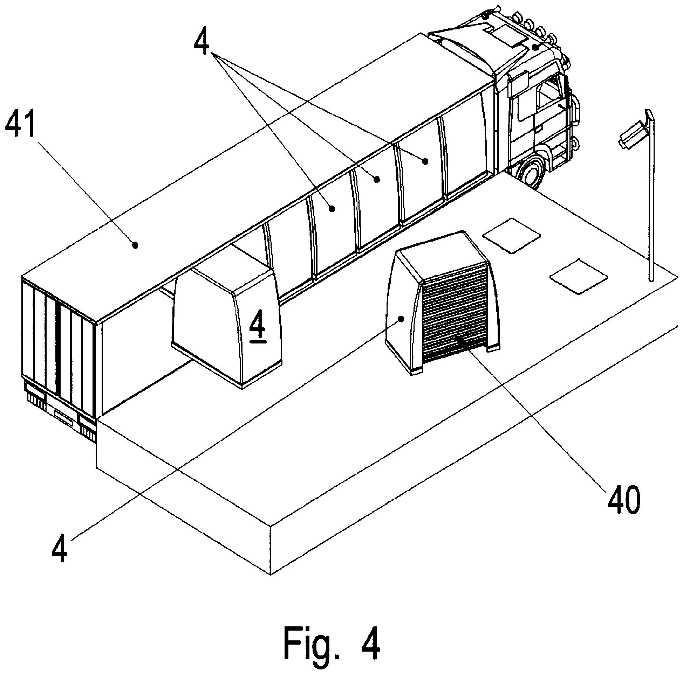

Wie in Figur 4 gezeigt, sind Transportfahrzeuge 4 der in den Figuren 1 bis 4 gezeigten Art in einen Lastkraftwagen 41 einlagerbar, wobei die Transportfahrzeuge 4 eigenständig, also autonom, das Einfahren in den Lastkraftwagen 41 steuern und dort sich aneinander gereiht einparken. Somit ist eine hohe Dichte an Transportfahrzeugen 4 erreichbar.

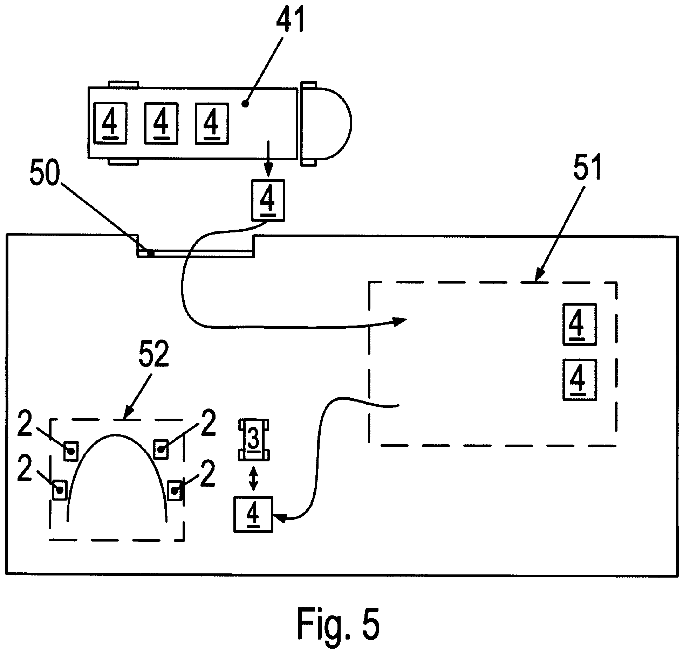

Wie in Figur 5 gezeigt wird das intralogistische System in einer Fertigungsanlage verwendet. Somit ist ein Lager, wie beispielsweise ein Hochregallager, einsparbar oder zumindest kleiner ausführbar.

Denn mittels eines Infrastrukturfahrzeugs, wie beispielsweise des Lastkraftwagens 41 und/oder mittels des Schienenfahrzeugs, werden die Transportfahrzeuge 4 angeliefert. Diese fahren autonom aus dem anliefernden Infrastrukturfahrzeug heraus und bewegen sich dann durch ein Eingangstor der Fertigungsanlage durch. An diesem Eingangstor ist ein Sensor 50 angeordnet, welcher das Transportfahrzeug 4 beim Durchfahren des Eingangstors detektiert und die vom Transportfahrzeug 4 in den von ihm transportierten Behältnissen 2 enthaltenen Waren detektiert. Beispielsweise erfolgt dies mittels RFID-tags, die von einem Lesegerät, welches der Sensor 50 aufweist, ausgelesen werden. Alternativ ist auch jedes Behältnis 2 mit einem RFID-Tag ausstattbar, welches die Information über die im Behältnis enthaltenen Waren aufweist, wobei ein Lesegerät, welches der Sensor 50 aufweist, die RFID-Tags ausliest.

Somit ist der zentralen Steuerung der Fertigungsanlage bekannt gemacht, welche Waren im jeweiligen Transportfahrzeug 4 enthalten sind.

Nachfolgend fährt das Transportfahrzeug 4 in eine Transferzone 51, in welcher es an einer jeweiligen Ladestation einparkt und mit Energie versorgbar ist. Hierzu sind mit Wechselstrom beaufschlagte Primärleiter im Boden verlegt, so dass eine an der Unterseite des jeweiligen Transportfahrzeugs 4 angeordnete Sekundärwicklung induktiv versorgbar ist aus dem jeweiligen Primärleiter und somit ein Energiespeicher des Transportfahrzeugs versorgbar ist.

In einer Montagezelle 52 der Fertigungsanlage mit mehreren U-förmig seriell angeordneten Arbeitsstationen wird ein Produkt gefertigt, wobei an jeder Arbeitsstation ein jeweiliger Herstellschritt ausgeführt wird.

An einer jeweiligen Arbeitsstation der Montagezelle wird zumindest ein jeweiliges Behältnis 2 gelagert, das mittels des Fahrzeugs 3 aus dem Transportfahrzeug 4 entnommen wurde und zur jeweiligen Arbeitsstation der Montagezelle 52 transportiert wurde. Bei dem jeweiligen Herstellschritt an der jeweiligen Arbeitsstation wird dann eine für den Herstellschritt benötigte Ware dem jeweiligen an der Arbeitsstation lagernden Behältnis 2 entnommen und zum Herstellen des Produktes verwendet.

Leere Behältnisse 2 werden vom Fahrzeug 3 abgeholt und in ein Transportfahrzeug 4 eingelagert, welches dann über die Transferzone 51 die Fertigungsanlage hin zu einem weiteren Infrastrukturfahrzeug verlässt.

Statt der U-förmigen Anordnung ist bei anderen erfindungsgemäßen Ausführungsbeispielen auch eine andere serielle Anordnung der Arbeitsstationen ausführbar.

### Bezugszeichenliste

1 Lagerbock
2 Behälter
3 Fahrzeug
4 Transportfahrzeug
5 Sekundärwicklung
6 Antrieb mit Antriebsrädern
7 Lenkrollen
8 Absatz, insbesondere auskragender Abschnitt des Gehäuseteils des Transportfahrzeugs 4
40 Abdeckung
41 Lastkraftwagen (LKW)
50 Sensor
51 Transferzone
52 Montagezelle mit mehreren U-förmig seriell angeordneten Arbeitsstationen

## Patentansprüche

1. Verfahren zum Betreiben einer Fertigungsanlage mit einem Transportsystem zum Transportieren eines Behältnisses (2), wobei das Transportsystem ein Fahrzeug (3) und ein Transportfahrzeug (4) aufweist, an dessen Gestell zwei voneinander beabstandete Radantriebe (6), jeweils aufweisend ein Rad, angeordnet sind,
wobei die beiden Räder zum Erzeugen von Traktionskraft für das Transportfahrzeug (4) einen Boden berührend angeordnet sind,
wobei das Transportfahrzeug (4) autonom ist,
wobei am Gestell des Transportfahrzeugs (4) ein erstes und ein zweites Absatzteil (8) angeordnet und/oder ausgebildet ist, wobei das erste Absatzteil vom zweiten Absatzteil beabstandet ist,
wobei zwischen den Radantrieben und zwischen den Absatzteilen ein Raumbereich angeordnet ist, in welchen das Fahrzeug mit dem von ihm aufgenommenen Behältnis einfahrbar ist und aus welchem das Fahrzeug mit dem Behältnis herausfahrbar ist,
wobei das Behältnis eine Breite aufweist, welche größer ist als der Abstand, insbesondere kleinste Abstand, zwischen den Absatzteilen,
wobei das Fahrzeug eine Hubvorrichtung aufweist und das Fahrzeug bei eingefahrener und auch bei ausgefahrener Hubvorrichtung in den Raumbereich einfahrbar ist,
wobei das Behältnis bei ausgefahrener Hubvorrichtung oberhalb der Absatzteile am Fahrzeug anordenbar ist,
wobei das Behältnis bei eingefahrener Hubvorrichtung auf den Absatzteilen aufgesetzt anordenbar ist,
wobei die Berührflächen des Behältnisses mit den Absatzteilen, jeweils den gleichen Abstand zum Boden aufweisen, wobei
in einem ersten Verfahrensschritt das insbesondere von einem Infrastrukturfahrzeug herantransportierte Transportfahrzeug (4) autonom an einem Sensor (50) der Fertigungsanlage vorbei, insbesondere durch ein Eingangstor der Fertigungsanlage, in eine Transferzone (51) fährt,
insbesondere wobei der Sensor (50) ein RFID-Lesegerät aufweist,
wobei mittels des Sensors (50) eine Information über die in einem Behältnis enthaltenen Waren, insbesondere Transportgut, einem zentralen Rechner der Fertigungsanlage übermittelt wird,
insbesondere wobei dem Transportfahrzeug (4) in der Transferzone (51) Energie zugeführt wird, insbesondere induktiv zugeführt wird zur Aufladung seines Energiespeichers,
wobei in einem nachfolgenden Verfahrensschritt das **Transportfahrzeug (4)** zu einer Montagezelle (52) autonom fährt,
wobei das Fahrzeug (3) zumindest ein Behältnis aus dem Transportfahrzeug (4) entnimmt und zu einer der Arbeitsstationen der Montagezelle (52) transportiert und dort das Behältnis absetzt, insbesondere auf einem Lagerbock (1) der jeweiligen Arbeitsstation,
wobei zur Herstellung eines Produktes an der jeweiligen Arbeitsstation eine jeweilige Ware, insbesondere Transportgut, dem Behältnis entnommen wird.

2. Verfahren nach Anspruch 1,
**dadurch gekennzeichnet, dass**
nach der Entleerung des Behältnisses (2) dieses von dem Fahrzeug (3) abgeholt und in ein oder
das Transportfahrzeug (4) eingelagert wird, welches insbesondere über die Transferzone (51) am Sensor (50) vorbei aus der Fertigungsanlage autonom herausfährt, insbesondere zu einem weiteren Infrastrukturfahrzeug.

3. **Fertigungsanlage mit einem Transportsystem** zum Transportieren eines Behältnisses (2) **zur Durchführung eines Verfahrens nach Anspruch 1 oder 2,**
wobei die Fertigungsanlage einen Sensor (50), eine Transferzone (51), einen zentralen Rechner, eine Montagezelle (52) mit Arbeitsstationen und einen Lagerbock (1) umfasst,
wobei das Transportsystem ein Fahrzeug (3) und ein Transportfahrzeug (4), aufweist, an dessen Gestell zwei voneinander beabstandete Radantriebe (6), jeweils aufweisend ein Rad, angeordnet sind,
**wobei die beiden Räder zum Erzeugen von Traktionskraft für das Transportfahrzeug (4), einen Boden berührend angeordnet sind,**
insbesondere wobei die Radachsen der beiden Räder zueinander parallel ausgerichtet sind,
wobei am Gestell ein erstes und ein zweites Absatzteil (8) angeordnet und/oder ausgebildet ist, wobei
das erste Absatzteil vom zweiten Absatzteil beabstandet ist,
wobei zwischen den Radantrieben (6) und zwischen den Absatzteilen ein Raumbereich angeordnet ist, in welchen das Fahrzeug (3) mit dem von ihm aufgenommenen Behältnis einfahrbar ist und aus welchem das Fahrzeug (3) mit dem Behältnis herausfahrbar ist,
wobei das Behältnis eine Breite aufweist, welche größer ist als der Abstand, insbesondere kleinste Abstand, zwischen den Absatzteilen,
wobei das Fahrzeug (3) eine Hubvorrichtung aufweist und das Fahrzeug (3) bei
eingefahrener und auch bei ausgefahrener Hubvorrichtung in den Raumbereich einfahrbar ist,
wobei das Behältnis bei ausgefahrener Hubvorrichtung oberhalb der Absatzteile am Fahrzeug (3) anordenbar ist,
wobei das Behältnis bei eingefahrener Hubvorrichtung auf den Absatzteilen aufgesetzt anordenbar ist,
**wobei die Absatzteile vom Fahrzeug unterfahrbar sind,**
**wobei das Transportfahrzeug (4) autonom ist,**
**wobei das Transportfahrzeug (4) eine Steuerung aufweist, die mit einem Positionserfassungssystem des Transportfahrzeugs (4) und/oder Abstandssensoren des Transportfahrzeugs (4) verbunden ist,**
**wobei die Berührflächen des Behältnisses mit den Absatzteilen, jeweils den gleichen Abstand zum Boden aufweisen.**

4. **Fertigungsanlage** nach Anspruch **3,**
**dadurch gekennzeichnet, dass**
das erste und zweite Absatzteil (8) als zwei parallel verlaufende Schienen ausgeformt sind,
insbesondere wobei die Schienenrichtung parallel zur auf das Transportfahrzeug (4) bezogene Fahrtrichtung des Fahrzeugs (3) beim Einfahren oder Herausfahren des Fahrzeugs (3) ist.

5. **Fertigungsanlage nach einem der Ansprüche 3 bis 4,**
**dadurch gekennzeichnet, dass**
der Raumbereich mit einer Abdeckung (40) verschließbar ist,
insbesondere so, dass die eingelagerten Behältnisse vor Niederschlag aus der Umgebung geschützt angeordnet sind.

6. **Fertigungsanlage nach einem der Ansprüche 3 bis 5,**
**dadurch gekennzeichnet, dass**
die Radantriebe (6) linear beweglich am Gestell des Transportfahrzeugs (4) angeordnet sind, insbesondere gleitend oder federnd gelagert sind.

7. **Fertigungsanlage nach einem der Ansprüche 3 bis 6,**
**dadurch gekennzeichnet, dass**
das Transportfahrzeug (4) Lenkrollen (7) zur Ableitung der um die Gewichtskraft der Radantriebe (6) reduzierten Gewichtskraft des Transportfahrzeugs (4) aufweist, insbesondere wobei zwischen den Lenkrollen (7) der Raumbereich angeordnet ist.

8. **Fertigungsanlage nach einem der Ansprüche 3 bis 6,**
**dadurch gekennzeichnet, dass**
die Radantriebe (6) jeweils einen Elektromotor aufweisen,
wobei die Elektromotoren aus einem Energiespeicher versorgbar sind, der aus einer Sekundärwicklung (5) speisbar ist.

9. **Fertigungsanlage** nach Anspruch **8,**
**dadurch gekennzeichnet, dass**
die Sekundärwicklung (5) induktiv an einen am Boden angeordneten Primärleiter koppelbar ist.

10. **Fertigungsanlage** nach Anspruch **9 oder 8,**
**dadurch gekennzeichnet, dass**
der Sekundärwicklung (5) eine Kapazität in Reihe oder parallel zugeschaltet ist,
wobei die Resonanzfrequenz des so gebildeten Schwingkreises der Frequenz des in den Primärleiter eingeprägten Wechselstroms entspricht.

## Claims

1. A method for operating a manufacturing installation having a transport system for transporting a receptacle (2), wherein the transport system includes a vehicle (3) and a transport vehicle (4), on the framework of which are arranged two wheel drives (6) which are spaced apart from each other, each having a wheel,
wherein the two wheels are arranged contacting a floor to generate tractive force for the transport vehicle (4),
wherein the transport vehicle (4) is autonomous,
wherein a first and a second shoulder part (8) are arranged and/or formed on the framework of the transport vehicle (4),
wherein the first shoulder part is spaced apart from the second shoulder part,
wherein between the wheel drives and between the shoulder parts there is arranged a spatial region into which the vehicle with the receptacle which it has received can be driven and out of which the vehicle with the receptacle can be driven,
wherein the receptacle has a width which is greater than the distance, in particular shortest distance, between the shoulder parts,
wherein the vehicle has a lifting device and the vehicle can be driven into the spatial region when the lifting device is retracted and also when it is extended,
wherein the receptacle, when the lifting device is extended, can be arranged above the shoulder parts on the vehicle,
wherein the receptacle, when the lifting device is retracted, can be arranged placed on the shoulder parts,
wherein the contact faces of the receptacle with the shoulder parts are each at the same distance from the floor, wherein
in a first method step the transport vehicle (4) which is transported in in particular by an infrastructure vehicle drives autonomously past a sensor (50) of the manufacturing installation, in particular through an entry gate of the manufacturing installation, into a transfer zone (51),
in particular wherein the sensor (50) has an RFID scanner,
wherein information about the goods contained in a receptacle, in particular goods for transport, is transmitted to a central computer of the manufacturing installation by means of the sensor (50),
in particular wherein energy is supplied, in particular supplied inductively, to the transport vehicle (4) in the transfer zone (51) to charge its energy storage unit,
wherein in a subsequent method step the transport vehicle (4) drives autonomously to an assembly cell (52),
wherein the vehicle (3) takes at least one receptacle out of the transport vehicle (4) and transports it to one of the work stations of the assembly cell (52) and deposits the receptacle there, in particular on a bearing bracket (1) of the respective work station,
wherein in order to produce a product at the respective work station a respective goods item, in particular goods for transport, is taken from the receptacle.

2. A method according to claim 1,
**characterised in that**
once the receptacle (2) has been emptied it is retrieved from the vehicle (3) and stored in a or the transport vehicle (4), which drives out autonomously in particular via the transfer zone (51) past the sensor (50) and out of the manufacturing installation, in particular to a further infrastructure vehicle.

3. A manufacturing installation having a transport system for transporting a receptacle (2) for carrying out a method according to claim 1 or 2,
wherein the manufacturing installation comprises a sensor (50), a transfer zone (51), a central computer, an assembly cell (52) with work stations and a bearing bracket (1),
wherein the transport system includes a vehicle (3) and a transport vehicle (4), on the framework of which two wheel drives (6) which are spaced apart from each other, each having a wheel, are arranged,
wherein the two wheels are arranged contacting a floor to generate tractive force for the transport vehicle (4),
in particular wherein the wheel axles of the two wheels are oriented parallel to each other,
wherein
a first and a second shoulder part (8) are arranged and/or formed on the framework, wherein
the first shoulder part is spaced apart from the second shoulder part,
wherein a spatial region is arranged between the wheel drives (6) and between the shoulder parts, into which spatial region can be driven the vehicle (3) with the receptacle which it has received and out of which the vehicle (3) with the receptacle can be driven,
wherein the receptacle has a width which is greater than the distance, in particular shortest distance, between the shoulder parts,
wherein the vehicle (3) has a lifting device and the vehicle (3) can be driven into the spatial region when the lifting device is retracted and also when it is extended,
wherein the receptacle, when the lifting device is extended, can be arranged above the shoulder parts on the vehicle (3),
wherein the receptacle, when the lifting device is retracted, can be arranged placed on the shoulder parts,
wherein the shoulder parts can be driven under by the vehicle,
wherein the transport vehicle (4) is autonomous,
wherein the transport vehicle (4) has a control system which is connected to a position detection system of the transport vehicle (4) and/or distance sensors of the transport vehicle (4),
wherein the contact faces of the receptacle with the shoulder parts are each at the same distance from the floor.

4. A manufacturing installation according to claim 3,
**characterised in that**
the first and second shoulder parts (8) are formed as two rails running in parallel,
in particular with the direction of the rails being parallel to the direction of travel, relative to the transport vehicle (4), of the vehicle (3) when the vehicle (3) drives in or out.

5. A manufacturing installation according to one of claims 3 to 4,
**characterised in that**
the spatial region can be closed with a covering means (40),
in particular such that the stored receptacles are arranged protected from precipitation from the surroundings.

6. A manufacturing installation according to one of claims 3 to 5,
**characterised in that**
the wheel drives (6) are arranged linearly movably on the framework of the transport vehicle (4), in particular are mounted so as to glide or are resiliently mounted.

7. A manufacturing installation according to one of claims 3 to 6,
**characterised in that**
the transport vehicle (4) has steering rollers (7) for transmitting the weight of the transport vehicle (4) reduced by the weight of the wheel drives (6), in particular with the spatial region being arranged between the steering rollers (7).

8. A manufacturing installation according to one of claims 3 to 6,
**characterised in that**
the wheel drives (6) each have an electric motor,
the electric motors being able to be supplied from an energy storage unit which can be fed from a secondary winding (5).

9. A manufacturing installation according to claim 8,
**characterised in that**
the secondary winding (5) can be coupled inductively to a primary conductor arranged on the floor.

10. A manufacturing installation according to claim 9 or 8,
**characterised in that**
a capacitor is connected in series or in parallel to the secondary winding (5),
the resonant frequency of the oscillating circuit thus formed corresponding to the frequency of the alternating current injected into the primary conductor.

## Revendications

1. Procédé d'exploitation d'une installation de production équipée d'un système de transport conçu pour transporter un conteneur (2), lequel système de transport comporte un véhicule (3) et un véhicule de transport (4)
sur le châssis duquel sont disposés deux entraînements (6) de roues, espacés l'un de l'autre et respectivement dotés d'une roue,
les deux roues étant placées en contact avec un sol, afin d'engendrer une force de traction destinée audit véhicule de transport (4),
lequel véhicule de transport (4) est autonome,
sachant que des première et seconde parties (8) en saillie sont disposées et/ou façonnées sur ledit châssis du véhicule de transport (4), la première partie en saillie étant espacée de la seconde partie en saillie,
une région spatiale, dans laquelle le véhicule peut être introduit avec le conteneur qu'il a reçu, et hors de laquelle ledit véhicule peut être extrait avec ledit conteneur, étant située entre les entraînements de roues et entre les parties en saillie,
ledit conteneur présentant une largeur supérieure à la distance, notamment à la distance minimale séparant lesdites parties en saillie,
le véhicule étant pourvu d'un dispositif de levage et ledit véhicule pouvant être introduit dans la région spatiale tant à l'état rétracté, qu'à l'état déployé dudit dispositif de levage,
sachant que le conteneur peut être placé au-dessus des parties en saillie, sur le véhicule, lorsque le dispositif de levage est à l'état déployé,
sachant que ledit conteneur peut être agencé pour être mis en place sur lesdites parties en saillie lorsque ledit dispositif de levage est à l'état rétracté,
les surfaces, par lesquelles ledit conteneur vient au contact desdites parties en saillie, présentant à chaque fois la même distance par rapport au sol, sachant que,
lors d'une première étape opératoire, le véhicule de transport (4), acheminé en particulier par un véhicule d'infrastructure, passe en regard d'un capteur (50) de l'installation de production, emprunte notamment un portail d'entrée de ladite installation de production et pénètre, de manière autonome, dans une zone de transfert (51),
ledit capteur (50) étant notamment muni d'un lecteur RFID,
une information relative aux marchandises renfermées par un conteneur, en particulier à un objet transporté, étant alors transmise à un ordinateur central de l'installation de production, au moyen dudit capteur (50),
de l'énergie étant en particulier délivrée audit véhicule de transport (4) dans ladite zone de transfert (51), notamment délivrée par induction, en vue de charger son accumulateur d'énergie,
sachant que, lors d'une étape opératoire successive, le véhicule de transport (4) se déplace de manière autonome vers une cellule de montage (52),
auquel cas le véhicule (3) prélève au moins un conteneur à partir dudit véhicule de transport (4) et le convoie vers l'un des postes de travail de ladite cellule de montage (52) auquel il dépose ledit conteneur, en particulier sur une selle d'appui (1) du poste de travail considéré,
une marchandise considérée, notamment un objet transporté, étant prélevé(e) du conteneur au poste de travail respectif, en vue de la fabrication d'un produit.

2. Procédé selon la revendication 1,
**caractérisé par le fait**
**qu'**à l'issue du vidage du conteneur (2), ce dernier est enlevé par le véhicule (3) et stocké dans un, ou dans le véhicule de transport (4) qui sort de l'installation de production de manière autonome, en particulier par l'intermédiaire de la zone de transfert (51), en regard du capteur (50), notamment vers un autre véhicule d'infrastructure.

3. Installation de production équipée d'un système de transport conçu pour transporter un conteneur (2), en vue de la mise en oeuvre d'un procédé conforme à la revendication 1 ou 2,
ladite installation de production incluant un capteur (50), une zone de transfert (51), un ordinateur central, une cellule de montage (52) munie de postes de travail, et une selle d'appui (1),
ledit système de transport comportant un véhicule (3) et un véhicule de transport (4) sur le châssis duquel sont disposés deux entraînements (6) de roues, espacés l'un de l'autre et respectivement dotés d'une roue,
les deux roues étant placées en contact avec un sol, afin d'engendrer une force de traction destinée audit véhicule de transport (4),
les essieux des deux roues étant, en particulier, orientés parallèlement l'un à l'autre, sachant que
des première et seconde parties (8) en saillie sont disposées et/ou façonnées sur ledit châssis,
la première partie en saillie étant espacée de la seconde partie en saillie,
une région spatiale, dans laquelle le véhicule (3) peut être introduit avec le conteneur qu'il a reçu, et hors de laquelle ledit véhicule (3) peut être extrait avec ledit conteneur, étant située entre les entraînements (6) de roues et entre les parties en saillie,
ledit conteneur présentant une largeur supérieure à la distance, notamment à la distance minimale séparant lesdites parties en saillie,
le véhicule (3) étant pourvu d'un dispositif de levage et ledit véhicule (3) pouvant être introduit dans la région spatiale tant à l'état rétracté, qu'à l'état déployé dudit dispositif de levage,
sachant que le conteneur peut être placé au-dessus des parties en saillie, sur le véhicule (3), lorsque le dispositif de levage est à l'état déployé,
sachant que ledit conteneur peut être agencé pour être mis en place sur lesdites parties en saillie lorsque ledit dispositif de levage est à l'état rétracté,
ledit véhicule pouvant circuler au-dessous desdites parties en saillie,
ledit véhicule de transport (4) étant autonome,
lequel véhicule de transport (4) est nanti d'une commande connectée à un système de détection d'emplacements dudit véhicule de transport (4) et/ou à des capteurs d'espacements dudit véhicule de transport (4),
sachant que les surfaces, par lesquelles ledit conteneur vient au contact desdites parties en saillie, présentent à chaque fois la même distance par rapport au sol.

4. Installation de production selon la revendication 3,
**caractérisée par le fait que**
les première et seconde parties (8) en saillie sont réalisées sous la forme de deux rails s'étendant parallèlement,
la direction desdits rails étant notamment parallèle à la direction de déplacement du véhicule (3), rapportée au véhicule de transport (4), lors de l'entrée et de la sortie dudit véhicule (3).

5. Installation de production selon l'une des revendications 3 à 4,
**caractérisée par le fait que**
la région spatiale peut être obturée par un capot (40),
notamment de façon telle que les conteneurs stockés soient logés à l'abri de précipitations émanant de l'espace environnant.

6. Installation de production selon l'une des revendications 3 à 5,
**caractérisée par le fait que**
les entraînements (6) de roues sont agencés avec faculté de mouvement linéaire sur le châssis du véhicule de transport (4), notamment montés de manière coulissante ou élastique.

7. Installation de production selon l'une des revendications 3 à 6,
**caractérisée par le fait que**
le véhicule de transport (4) est pourvu de roulettes directrices (7) dévolues à la dissipation de la force proportionnelle au poids dudit véhicule de transport (4), diminuée de la force proportionnelle au poids des entraînements (6) de roues,
la région spatiale étant notamment située entre lesdites roulettes directrices (7).

8. Installation de production selon l'une des revendications 3 à 6,
**caractérisée par le fait que**
les entraînements (6) de roues sont respectivement équipés d'un moteur électrique,
les moteurs électriques pouvant être alimentés à partir d'un accumulateur d'énergie pouvant être approvisionné à partir d'un enroulement secondaire (5).

9. Installation de production selon la revendication 8,
**caractérisée par le fait que**
l'enroulement secondaire (5) peut être couplé, par induction, à un conducteur primaire implanté au sol.

10. Installation de production selon la revendication 9 ou 8,
**caractérisée par le fait**
**qu'**un condensateur est additionnellement branché en série ou en parallèle avec l'enroulement secondaire (5),
la fréquence de résonance du circuit oscillant, ainsi formé, correspondant à la fréquence du courant alternatif injecté dans le conducteur primaire.
